Europäisches Patentamt

(19) European Patent Office    (11) Publication number:    **0 143 941**
Office européen des brevets    **B1**

(12)    EUROPEAN PATENT SPECIFICATION

(45) Date of publication of patent specification: **08.06.88**    (51) Int. Cl.⁴: **F 16 D 65/02**

(21) Application number: **84111697.3**

(22) Date of filing: **01.10.84**

(54) Spring entrapment of split wedge floatation device.

(30) Priority: **30.11.83 US 556651**

(43) Date of publication of application:
**12.06.85 Bulletin 85/24**

(45) Publication of the grant of the patent:
**08.06.88 Bulletin 88/23**

(84) Designated Contracting States:
**DE FR GB IT**

(56) References cited:
**EP-A-0 049 187**
**DE-A-2 722 614**
**GB-A-2 027 141**

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Bach, Lloyd Gene**
**61500 Greentree Drive**
**South Bend Indiana 46614 (US)**
Inventor: **Colpaert, James John**
**16517 Bennington Court**
**Granger Indiana 46530 (US)**

(74) Representative: **Brullé, Jean et al**
**Division Technique Service Brevets Bendix**
**Europe 126; rue de Stalingrad**
**F-93700 Drancy (FR)**

## Description

The invention relates to a floating caliper disc brake.

Floating caliper disc brakes include a rotor having friction faces on opposite sides thereof and a caliper cooperating with a pair of friction elements to urge the pair of friction elements into engagement with the friction faces to retard rotation of the rotor during brake application. A non-rotating torque member carries the caliper in substantially fixed radial and circumferential position relative to the rotor. The caliper is movable, or floats, axially to a limited extent relative to the rotor and torque member.

A brake application is effected by a fluid motor carried by the caliper. When the fluid motor is supplied with a pressurized fluid, it forces one of the friction elements against a friction face of the brake disc. Reaction forces acting through the caliper cause the caliper to slide axially relative to the torque member and rotor so that the other friction element is forced against the other friction face of the disc brake.

The floating caliper and torque member are coupled together to allow for axial movement of the caliper relative to the fixed torque member. Burnette U.S. Patent No. 4, 084, 665 entitled "DISC BRAKE AND MOUNTING MEANS THEREFOR" and issued April 18, 1978, illustrates such a disc brake assembly and a means for floatably mounting the caliper to the fixed torque member. The caliper is supported by the torque member through pins having an elastomeric ring construction. Ritsema U.S. Patent No. 4,318,458 entitled "DISC BRAKE AND CONNECTING ASSEMBLY THEREFOR" and issued March 9, 1983, illustrates another construction having pins for slidably coupling together the caliper and fixed torque member. Both cited patents utilize a screw attached to the torque member and acting in conjunction with either a pin tab or a washer to retain a pin within the grooved recess between the caliper and torque member. EP-A-0.049.187 issued April 7, 1982, entitled "DISC BRAKE" discloses another construction for slidably coupling together the caliper and torque member, and describes the use of wedge-shaped pins which engage one another along respective inclined surfaces while disposed within an axially extending aperture or recess located between the caliper and torque member. The pins are urged inwardly by a resilient spring member engaging sockets within the respective ends of the pins, whereby the pins fill the axially extending recess so that the caliper and torque member are not in direct engagement. This eliminates frictional engagement between the caliper and torque member both during and after braking when the caliper assembly returns to its initial deactivated position. Thus, the confronting surfaces of the caliper and fixed torque member do not come into engagement and this eliminates any frictional resistance to the return of the caliper to its initial deactivated position. This assists, along with runout or wobble of the disc brake assembly, to reposition the caliper axially relative to the torque member, so that the friction elements do not drag on the rotating brake disc. It further increases the wear life of the friction elements, prevents a decrease in fuel consumption due to dragging of the brakes, and provides a more efficiently operable and reliable disc brake assembly.

The present invention is an improved means for retaining the wedge-shaped pins in proper position within the axially extending aperture located between and defined by axially extending recesses of the torque member and caliper. Although the wedge-shaped pins provide an improved mounting of the caliper relative to the torque member, it is possible that the pins may be damaged or destroyed during the operational life of the disc brake assembly. Therefore, it is important to first maintain the pins in their proper position within the axially extending aperture during the operational life of the disc brake assembly, and to provide, in the event there is destruction or failure of the wedge-shaped pins, for the caliper to be maintained in radial and circumferential position relative to the torque member. If the pins should fail, the caliper could separate from the torque member and cause failure of the disc brake assembly. Therefore, it is an object of the present invention to maintain the caliper in proper radial and circumferential alignment relative to the torque member if the pins should fail to maintain that alignment.

The present invention comprises a dual purpose resilient spring which engages the respective ends of the wedge-shaped pin members to resiliently urge the pin members inwardly so that they are maintained in proper position within the axially extending aperture and thereby maintain the radial and circumferential alignment of the caliper relative to the torque member. The dual purpose spring traverses an exterior portion of the torque member to engage an abutment of the torque member and thus be secured in position relative to the torque member. The spring includes enlarged end members each comprising a coil which presents a flat surface for engaging the end of the respective pin to urge the pin inwardly of the aperture, with the enlarged spring end members disposed within the axially extending aperture. Because the enlarged end members are disposed interiorly of the axially extending aperture, the enlarged end members will maintain the radial and circumferential alignment of the caliper relative to the torque member if the wedge-shaped pins are damaged or should fail. The enlarged end members may also comprise a plurality of coils that present not only a flat surface for maintaining the pins in position within the aperture, but which provide further resilient biasing force urging the pins inwardly and provide additional support for maintaining the alignment of the caliper relative to the torque member if the pins are damaged or should fail.

The invention is described in detail below with reference to the drawings which illustrate the embodiments of the invention.

Figure 1 is a side elevational view of the disc brake made pursuant to the present invention;

Figure 2 is a cross-sectional view taken substantially along line 2-2 of Figure 1;

Figure 3 is an exploded view of the disc brake assembly utilizing the present invention;

Figure 4 is a fragmentary cross-sectional view taken substantially along line 4-4 of Figure 1;

Figure 5 is a isometric view of the pair of wedgeshaped members comprising one pin; and

Figure 6 is an isometric view of an alternative embodiment of the present invention.

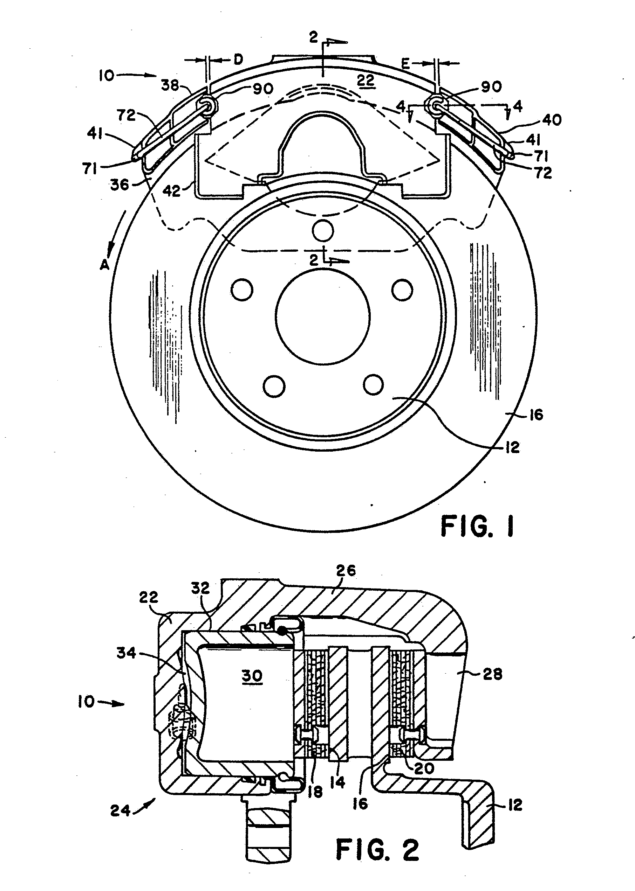

Referring to Figures 1 and 2, a disc brake indicated generally by reference number 10 includes a rotor 12 rotatable with a wheel assembly (not shown) and having a pair of opposed friction faces 14 and 16. A pair of friction elements 18, 20 are disposed adjacent friction faces 14 and 16, respectively. The friction elements 18 and 20 are urged into braking engagement with their corresponding friction faces 14 and 16 when a brake application is effected. A caliper 22 includes a fluid motor portion 24 disposed adjacent the friction face 14, a bridge portion 26 that traverses the periphery of the rotor 12, and a radially inwardly extending reaction portion 28 which is disposed adjacent the face 16. The fluid motor portion 24 includes a piston 30 slidably arranged in a bore 32 defined within caliper 22. When a brake application is effected, fluid is communicated to the variable-volume chamber 34 defined between the end of the piston and corresponding end of bore 32 to urge piston 30 toward the rotor 12. Piston 30 urges friction element 18 into engagement with friction face 14 and reaction forces acting through the bridge portion 26 move the caliper 22 to bias friction element 20 into engagement with friction face 16. When the brake is subsequently released, piston 30 returns to its brake-release position.

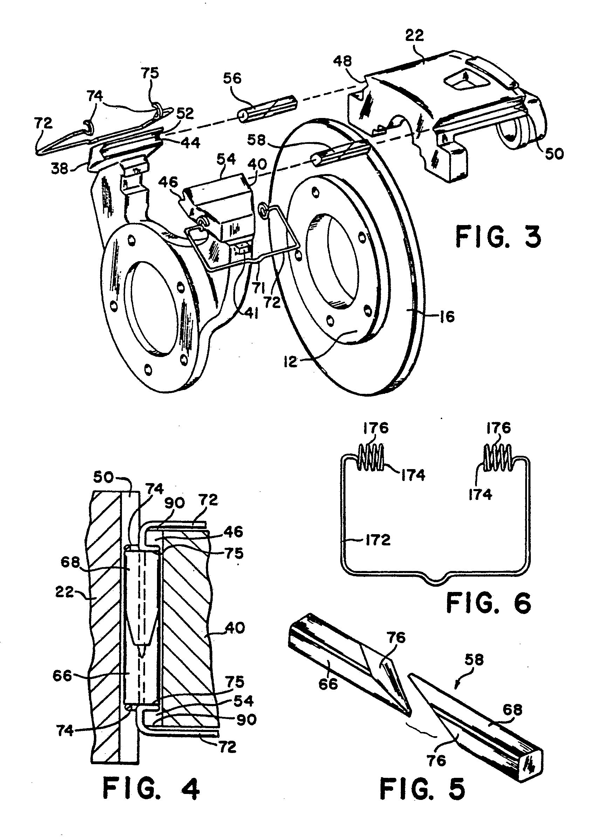

Turning to Figure 1, caliper 22 is mounted for axial movement with respect to the rotor 12 by a torque member 36, which is secured to a non-rotating portion of the axle assembly (not shown). The torque member 36 includes a pair of circumferentially spaced arms 38, 40, that define a recess 42 therebetween. The caliper 22 is received in the recess 42 between torque member arms 38 and 40. Viewing Figure 1, it will be seen that the caliper 22 is spaced from the torque member 38 by clearance "D". Likewise, the caliper is spaced from the arm 40 by a clearance "E". In Figures 3 and 4, it can be seen that the torque member arms 38 and 40 and the caliper 22 include matching V-shaped recesses or grooves 44, 46, 48, and 50, respectively. Recesses 44 and 48, and recesses 46 and 50, when placed in registry with each other, define substantially square-shaped apertures 52 and 54, respectively. Apertures 52 and 54 extend axially between the arms 38 and 40 and caliper 22.

A pair of pins 56 and 58 are received in the apertures 52 and 54, respectively. Figure 5 illustrates the pin 58 which includes a pair of wedge-defining members 66 and 68. The wedge members 66 and 68 are identical and complementary to each other and each includes an inclined surface 76. The members 66 and 68 overlap each other within the aperture 54 so that the members cooperate to define a cross-section similar to the cross-section of pin 56. Figures 1 and 4 illustrate that the wedge members 66 and 68 cooperate to space apart the caliper 22 and the torque arm member 40. As a result, caliper 22 and torque member 40 define clearance "E". Correspondingly, the wedge members of pin 56 cooperate to space apart caliper 22 and torque arm member 38 to define clearance "D".

As illustrated in Figures 1, 3, and 4, a C-shaped spring 72 (a portion of which is illustrated by Figure 4) includes enlarged end members 74 which are received in an axially extending aperture. Spring 72 biases members 66 and 68 toward each other within apertures 52, 54. Consequently, wedge members 66 and 68 cooperate with each other at their wedge surfaces 76 whereby the surfaces slide on each other so that the pins have a variable cross section which correspondingly spaces the caliper 22 from the respective torque arm member. The pins are expansible to eliminate radial and circumferential clearances from the disc brake assembly. Each expansible pin 56 and 58 biases the caliper toward the other expansible pin, and thus maintains the clearances "D" and "E" between the caliper 22 and the respective torque arms 38 and 40. Turning to Figure 4, it should be noted that the wedge members 66 and 68 are individually removable from the aperture 54. Removal of enlarged end members 74 of spring 72 from engagement with the ends of members 66 and 68 allows the wedge members to be removed from the aperture 54. Consequently. the caliper 22 is removable from the recess 42.

The wedge members 66 and 68 have equal surface areas in contact with the caliper 22 and with the torque arm member arm 40. The surface area of member 68 which is in contact with caliper 22 is equal to the surface area of member 66 in contact with the caliper. Similarly, the area of member 68 in contact with torque arm member 40 is equal to the area of member 66 in contact with the arm member 40. As a result, axial movement of the caliper 22 creates balanced axial friction forces on each of the members 66 and 68. Because the forces on the component parts of pin 58 (members 66 and 68) are balanced, axial movement of the caliper 22 does not cause the pin 58 to loosen or expand in aperture 54. Expansion of the pin 58 in aperture 54 responsive to axial movement of the caliper could lock the caliper to the torque member, thereby preventing proper brake operation.

The pins 56 and 58 are made of polyphenylene sulfide resin. This resin is inherently corrosion-resistant so that the sliding surfaces of the brake remain free of corrosion throughout the service life of the brake. The pins possess adequate mechanical strength when they are fabricated from polyphenylene sulfide resin reinforced with less than 30% to 40% weight of glass fibers. The pins 56 and 58 could also be made from metal, for example, stainless steel.

As illustrated in Figures 1 and 4, the enlarged end members 74 of spring 72 are disposed inwardly of the openings 90 of axially extending apertures 52 and 54. Each enlarged end member 74 presents a flat surface 75 for engaging the flat end of the respective pin. The spring 72 biases the pins 66 and 68 inwardly of aperture 54, so that as pins 66 and 68 slide along their respective inclined surfaces, there is compensation for the manufacturing tolerances existing between the caliper and torque arm member. Each spring 72 also includes a portion 71 which engages a torque arm abutment 41 to maintain the exterior alignment of the spring 72 relative to the torque arm.

Each enlarged end member 74 is disposed within the associated axially extending aperture so that if the pins 66 and 68 should fail, either by damage imparted directly to the pins or failure of the material of the pins, then the end members 74 within the aperture will maintain the caliper in radial and circumferential alignment with torque arms 38 and 40. This occurs because the enlarged end members 74 have a diameter large enough to substantially span the diameter of the aperture. Thus, the enlarged end.members 74 of spring 72 will maintain the caliper in radial and circumferential alignment with the torque member 36 and also permit axial movement of the caliper relative to the torque member. Maintenance of the caliper in proper radial and circumferential alignment with the torque member is an important safety device which enables braking operation until the disc brake assembly can be repaired by the insertion of new pins 66 and 68.

Referring to Figure 6, there is illustrated an alternative embodiment of the spring member which comprises a resilient spring 172 including enlarged end members 174. Enlarged end members 174 include multiple coils 176. Multiple coils 176 not only provide additional inward biasing of the pins 66 and 68, but provide additional coils of the appropriate diameter for maintaining the caliper in alignment with the torque member if the pins are damaged or should fail.

### Claims

1. In a disc brake assembly (10) having a torque member (36) fixedly disposed adjacent a rotor (12) to be braked, a pair of friction elements (18, 20) engageable with the rotor (12) during braking, a caliper (22) transversely moveable relative to said torque member (36) and cooperating with the friction elements (18, 20) to urge the elements into engagement with the rotor (12), the torque member (36) supporting said caliper (22) in substantially fixed circumferential position relative to said rotor (12), said caliper (22) and torque member (36) having axially extending recesses (44, 46, 48, 50) in registry with one another and the recesses (44, 46, 48, 50) cooperating to define axially extending apertures (52, 54) between said caliper (22) and torque member (36), elongated pin members (56, 58) slidably received in said axially extending apertures (52, 54) for the purpose of transversely movably supporting and circumferentially positioning said caliper (22) relative to said torque member (36), and a resilient spring (72) associated with each aperture (52, 54) and having ends (74) engaging the associated pin member to maintain the pin member in the axially extending aperture, characterized in that said resilient spring (72) includes at each end (74) thereof an enlarged end member (74) disposed within said axially extending aperture (52, 54) and of a size substantially approximating the diameter of the aperture in order to maintain the circumferential position of the caliper (22) relative to the torque member (36) if the associated pin member (56, 58) fails to effect said circumferential position.

2. The disc brake assembly according to claim 1, characterized in that said enlarged end members (74) each comprises a coil presenting a flat surface (75) for engaging the end of the respective pin member.

3. The disc brake assembly according to claim 2, characterized in that each enlarged end member (174) comprises a plurality of coils (176) for maintaining the associated pin members in the aperture.

4. The disc brake assembly according to claim 2, characterized in that said enlarged end members (74, 174) are disposed inwardly of the open end of the aperture (52, 54) and provide for lateral movement of the caliper (22) relative to said torque member (36) after failure of said pin members (56, 58) to effect said circumferential position.

5. The disc brake assembly according to claim 2, characterized in that said resilient spring (72) traverses a portion of the exterior perimeter of said torque member (36) and engages abutment means (41) of said torque member (36) in order to maintain the alignment of said spring (72) relative to said torque member (36).

### Patentansprüche

1. Scheibenbremsenanordnung (10) mit einem Drehmomententeil (36), das nahe einem zu bremsenden Rotor (12) fest angebracht ist, einem Paar Reibelemente (18, 20), die mit dem Rotor (12) während der Bremsung zusammenwirken, einem Sattel (22), der quer relativ zu dem Drehmomententeil (36) bewegbar ist und mit den Reibelementen (18, 20) zusammenwirkt, um die Elemente mit dem Rotor (12) in Eingriff zu drücken, wobei das Drehmomententeil (36) den Sattel (22) in einer im wesentlichen festen Umfangslage relativ zu dem Rotor (12) abstützt, wobei der Sattel (22) und das Drehmomententeil (36) axial sich erstreckende Einschnitte (44, 46, 48, 50) aufweisen, die zueinander ausgerichtet sind und zusammenwirken, um axial sich erstreckende Öffnungen (52, 54) zwischen dem Sattel (22) und dem Drehmomententeil (36) zu bilden, mit langgestreckten Stiftteilen (56, 58), die gleitend in den sich axial erstreckenden Öffnungen (52, 54) aufgenommen werden, um den Sattel (22) relativ zu dem Drehmomententeil (36) querbewegbar abzustützen und in der Umfangslage festzuhalten, und einer elastischen Feder (72), die jeder Öffnung (52, 54) zugeordnet ist und Enden (74) aufweist, die mit dem zugehörigen Stiftteil im Eingriff sind, um den Stiftteil in der sich axial erstreckenden Öffnung zu halten, dadurch gekennzeichnet, daß die elastische Feder (72) an jedem ihrer Enden (74) ein vergrößertes Endteil (74) aufweist, das in der sich axial erstreckenden Öffnung (52, 54) angeordnet ist und eine Abmessung aufweist, die im wesentlichen etwa dem Durchmesser der Öffnung entspricht, um die Umfangslage des Sattels (22) relativ zu dem Drehmomententeil (36) aufrecht zu halten, falls das zugehörige Stiftteil (56, 58) versagt.

2. Scheibenbremsenanordnung nach Anspruch 1, dadurch gekennzeichnet, daß die vergrößerten Endteile (74) jeweils eine Windung enthalten, die eine ebene Fläche (75) aufweist, die mit dem Ende des entsprechenden Stiftteiles zusammenwirkt.

3. Scheibenbremsenanordnung nach Anspruch 2, dadurch gekennzeichnet, daß jedes vergrößerte Endteil (174) mehrere Windungen (176) enthält, die die zugehörigen Stiftteile in der Öffnung halten.

4. Scheibenbremsenanordnung nach Anspruch 2, dadurch gekennzeichnet, daß die vergrößerten Endteile (74, 174) innerhalb der offenen Enden der Öffnungen (52, 54) angeordnet sind und eine seitliche Bewegung des Sattels (22) relativ zu dem Drehmomententeil (36) ermöglichen, nachdem die Stiftteile (56, 58) versagt haben, um die Umfangslage zu bewerkstelligen.

5. Scheibenbremsenanordnung nach Anspruch 2, dadurch gekennzeichnet, daß die elastische Feder (72) einen Abschnitt des äußeren Umfangs des Drehmomententeils (36) überspannt und mit einem Widerlager (41) des Drehmomententeils (36) zusammenwirkt, um die Ausrichtung der Feder (72) relativ zu dem Drehmomententeil (36) aufrecht zu erhalten.

## Revendications

1. Ensemble de frein à disque (10) ayant un organe de torsion (36) solidement fixé à proximité d'un rotor (12) à freiner, une paire d'éléments de frottement (18, 20) applicables sur le rotor (12) pendant le freinage, un étrier (22) mobile transversalement par rapport audit organe de torsion (36) et coopérant avec les éléments de frottement (18, 20) pour pousser ces éléments en contact avec le rotor (12), l'organe de torsion (36) supportant ledit étrier (22) dans une position circonférentielle substantiellement fixe par rapport audit rotor (12), ledit étrier (22) et ledit organe de torsion (36) présentant des creux (44, 46, 48, 50) s'étendant axialement en regard l'un de l'autre et les creux (44, 46, 48, 50) coopérant pour définir des ouvertures (52, 54) s'étendant axialement entre ledit étrier (22) et ledit organe de torsion (36), des broches allongées (56, 58) glissantes logées dans lesdites ouvertures s'étendant axialement (52, 54) dans le but de supporter en mouvement transversal et de positionner circonférentiellement ledit étrier (22) par rapport audit organe de torsion (36), et un ressort élastique (72) associé à chaque ouverture (52, 64) et ayant des extrémités (74) attaquant la broche associée pour maintenir la broche dans l'ouverture s'étendant axialement, caractérisé en ce que ledit ressort élastique (72) comporte à chacune de ses extrémités (74) un élément d'extrémité agrandi (74) disposé à l'intérieur de ladite ouverture s'étendant axialement (52, 54) et d'une dimension s'approchant substantiellement du diamètre de l'ouverture, afin de maintenir la position circonférentielle de l'étrier (22) par rapport à l'organe de torsion (36) si la broche associée (56, 58) ne peut assurer ladite position circonférentielle.

2. Ensemble de frein à disque suivant la revendication 1, caractérisé en ce que chacun desdits éléments d'extrémité agrandis (74) comprend une spire présentant une surface plate (75) pour s'appliquer sur l'extrémité de la broche respective.

3. Ensemble de frein à disque suivant la revendication 2, caractérisé en ce que chaque élément d'extrémité agrandi (174) comprend une pluralité de spires (176) pour maintenir les broches associées dans l'ouverture.

4. Ensemble de frein à disque suivant la revendication 2, caractérisé en ce que lesdits éléments d'extrémité agrandis (74, 174) sont disposés à l'intérieur de l'extrémité ouverte de l'ouverture (52, 54) et assurent le déplacement latéral de l'étrier (22) par rapport audit organe de torsion (36) après apparition de l'incapacité desdites broches (56, 58) d'assurer ladite position circonférentielle.

5. Ensemble de frein à disque suivant la revendication 2, caractérisé en ce que ledit ressort élastique (72) traverse une portion du contour extérieur dudit organe de torsion (36) et s'applique sur une butée (41) dudit organe de torsion (36) afin de maintenir l'alignement dudit ressort (72) par rapport audit organe de torsion (36).

FIG. 1

FIG. 2

FIG. 3

FIG. 4

FIG. 5

FIG. 6